**Europäisches Patentamt**

**European Patent Office**

**Office européen des brevets**

(19)

(11) Numéro de publication: **0 148 677**
**B1**

(12) **FASCICULE DE BREVET EUROPEEN**

(45) Date de publication du fascicule du brevet:
**22.03.89**

(51) Int. Cl.⁴: **B 25 J 17/02**, B 23 P 19/00

(21) Numéro de dépôt: **84402575.9**

(22) Date de dépôt: **13.12.84**

(54) **Poignet de robot magnétique.**

(30) Priorité: **23.12.83 FR 8320978**

(43) Date de publication de la demande:
**17.07.85 Bulletin 85/29**

(45) Mention de la délivrance du brevet:
**22.03.89 Bulletin 89/12**

(84) Etats contractants désignés:
**DE GB IT**

(56) Documents cités:
**WO-A-80/01547**
**FR-A- 1 504 027**
**FR-A- 2 445 199**
**FR-A- 2 474 927**
**US-A- 4 098 001**
**US-A- 4 179 783**

(73) Titulaire: **AUTOMOBILES CITROEN, 62 Boulevard Victor-Hugo, F-92200 Neuilly-sur-Seine (FR)**
Titulaire: **AUTOMOBILES PEUGEOT, 75, avenue de la Grande Armée, F-75116 Paris (FR)**

(72) Inventeur: **Gabrielli, Gino, 97, avenue de Villiers, F-75017 Paris (FR)**

(74) Mandataire: **Boivin, Claude, 9, rue Edouard-Charton, F-78000 Versailles (FR)**

ACTORUM AG

## Description

Un robot comporte, en général, un poignet propre à exécuter une opération donnée, poignet qu'il peut déplacer pour l'amener en un point de coordonnées définies auquel l'axe du poignet se présente selon une direction également définie, par exemple verticale.

Un robot de ce genre peut notamment être utilisé pour introduire une pièce mâle dans un alésage, l'extrémité de la pièce et/ou l'ouverture de l'alésage étant chanfreinées pour faciliter cette opération. Si l'axe du poignet du robot coïncide parfaitement avec l'axe de l'alésage, il suffit de déplacer le poignet dans la direction de cet axe pour insérer la pièce dans l'alésage. Mais, en général, la coïncidende ne peut être réalisée que dans les limites de la tolérance du robot; il peut donc arriver que l'insertion ne puisse s'effectuer. On connaît des poignets de robot qui permettent d'introduire facilement une pièce mâle dans un alésage, lorsque l'extrémité de la pièce et/ou l'ouverture de l'alésage sont chanfreinées, et qui comprennent un bras relié au robot, un embout propre à porter la pièce, des éléments de liaison solidaires du bras et de l'embout, permettant un déplacement libre de l'embout par rapport au bras, et assurant un autocentrage de cet embout. De tels robots sont décrits notamment dans les brevets US 4 098 001, 4 337 579, 4 179 783 ou dans le brevet français 2 506 195. Mais, dans ces poignets de robot, la liaison entre le bras et l'embout est relativement compliquée.

Le brevet français 1 504 027 décrit par ailleurs un dispositif magnétique de centrage comprenant d'une part une ventouse magnétique formée de deux anneaux concentriques aimantés radialement et séparés par un entrefer, et d'autre part une pièce à centrer qui est en matière plastique et dans la masse de laquelle sont noyés au moins trois barreaux ou billes métalliques. Des billes en verre peuvent éventuellement être interposées entre la ventouse et la pièce pour réduire le frottement et faciliter le centrage. Mais un tel dispositif magnétique ne peut pratiquement pas être utilisé dans les poignets de robot connus. La présente invention a pour objet un poignet de robot de type ci-dessus, où les moyens de liaison comprennent deux éléments aimantés dans la direction de leur axe, qui sont interposés entre le bras et l'embout, disposés de manière à s'attirer mutuellement, et séparés l'un de l'autre par des billes.

Les billes sont de préférence aimantées. Elles assurent ainsi une double fonction. En présence d'une force latérale exercée sur l'embout, elles permettent la liberté de mouvement; en l'absence de force latérale, elles transmettent le flux magnétique et assurent le centrage en se répartissant de façon homogène entre les deux faces aimantées.

Les faces en regard des éléments aimantés peuvent être planes, les éléments étant solidaires respectivement des bras et de l'embout. L'embout peut ainsi se déplacer parallèlement à lui-même dans n'importe quelle direction, en ayant deux degrés de liberté. Les faces en regard des éléments aimantés peuvent également être sphériques, l'une concave et l'autre convexe, les éléments étant solidaires respectivement du bras et de l'embout. L'embout peut ainsi s'orienter dans n'importe quelle direction par rapport au bras.

Dans un mode particulier de l'invention, les moyens de liaison comprennent trois éléments différents aimantés dans la direction de leur axe, qui sont superposés et séparés les uns des autres par des billes, l'un des éléments d'extrémité étant solidaire du bras alors que l'autre est solidaire de l'embout, l'embout central présentant une face plane en regard d'une face plane de l'un des éléments d'extrémité et une face sphérique, concave ou convexe en regard d'une face sphérique, respectivement convexe ou concave, de l'autre élément d'extrémité. L'embout possède ainsi quatre degrés de liberté par rapport au bras.

Les faces en regard des éléments aimantés ont de préférence même section transversale. Ces éléments tendent alors, sous l'effet des forces magnétiques, à se disposer exactement en regard l'un de l'autre en assurant ainsi un autocentrage de l'embout par rapport au bras.

On a décrit ci-après, à titre d'exemple non limitatif, deux modes de réalisation d'un poignet de robot selon l'invention avec référence au dessin annexé dans lequel:

La Figure 1 est le schéma d'un poignet admettant un déplacement plan, à deux degrés de liberté;

La Figure 2 est le schéma d'un poignet admettant à la fois un déplacement plan et un déplacement angulaire, l'ensemble ayant quatre degrés de liberté.

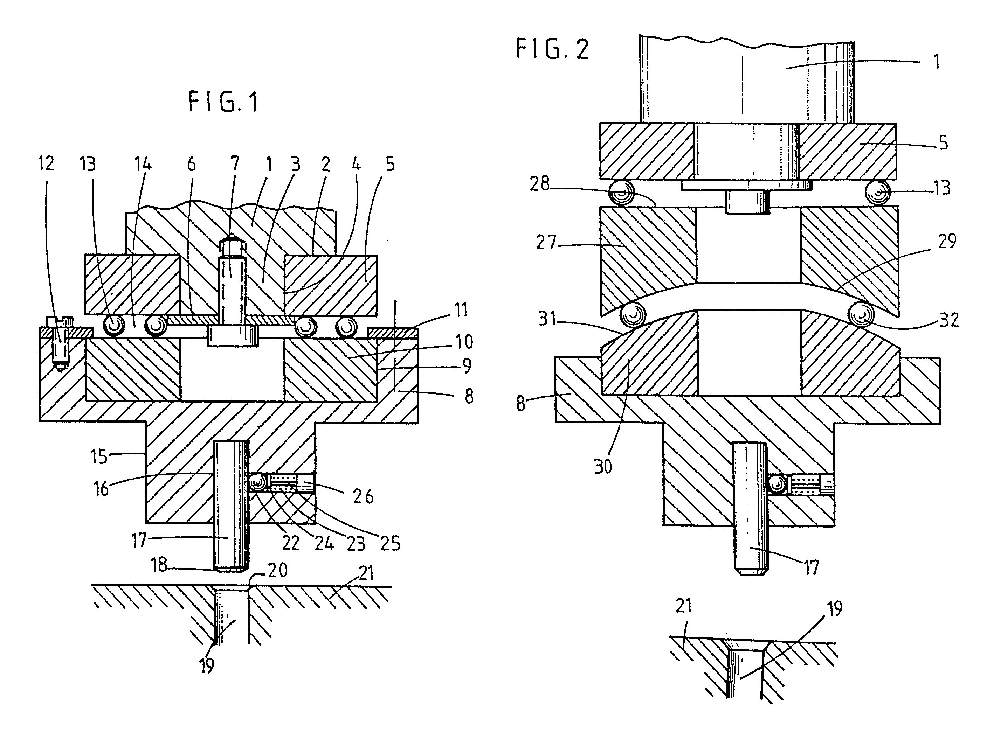

Tel qu'il est représenté à la Figure 1, le poignet de robot comprend un bras 1 qui présente un épaulement 2 et une partie d'extrémité 3 de diamètre réduit; cette dernière est engagée dans l'alésage 4 d'un disque plan 5 qui est aimanté dans la direction de l'axe du bras et du disque, c'est-à-dire que ses faces aimantées sont ses faces perpendiculaires à cet axe. Le disque est maintenu contre l'épaulement 2 par une rondelle amagnétique 6 fixée par des vis 7.

Le poignet de robot comprend également un embout 8 présentant un alésage 9 dans lequel est disposé un disque aimanté 10, de même forme et de même section que le disque 5. Ce disque est maintenu dans l'alésage 9 par une rondelle amagnétique 11 fixée par des vis 12 sur la tranche de l'embout 8.

L'embout 8 est disposé de façon que les deux disques 5 et 10 soient en vis à vis; ces disques sont fixés de manière que leurs faces en regard présentent des polarités contraires et tendent ainsi à s'attirer mutuellement. Ils sont maintenus séparés l'un de l'autre par des billes métalliques 13 qui sont intercalées entre eux en permettant de petits déplacements de l'embout 8 parallèlement à lui-même par rapport au bras 1. Les rondelles 7 et 11 servent de butoirs intérieur et extérieur pour ces billes et les empêchent de s'échapper.

L'attraction mutuelle des deux disques 5 et 10 et la transmission du flux magnétique par les billes 13 assurent un autocentrage de l'embout 8 par rapport au bras 1 et une répartition homogène des billes dans l'intervalle de séparation 14. L'embout 8 présente, à son extrémité opposée au disque 5, une partie de diamètre réduit 15 munie d'un perçage axial 16. Dans ce perçage peut être emmanchée une pièce 17, par exemple cylindrique, dont l'extrémité présente un chanfrein 18 et qui est destiné à être inséré dans un alésage 19, également muni d'un chanfrein 20, d'une pièce fixe 21.

La pièce 17 peut être maintenue dans l'embout par une bille ou un galet d'appui 22 sur lequel un ressort 23 peut exercer une poussée par l'intermédiaire d'une rondelle 24. Celle-ci est solidaire d'une tige de traction axiale 25 commandée par un électro-aimant 26.

L'aimantation des disques 5 et 10 est telle que la force d'attraction soit supérieure au poids de l'embout 8 portant la pièce 17.

Quand la pièce 17 est engagée dans le chanfrein de l'alésage 19 et que le poignet est déplacé verticalement pour insérer cette pièce 17 dans l'alésage, l'effort transversal exercé par le chanfrein 18 provoque un déplacement de l'embout par roulement des billes 13 contre les faces en regard des disques 5 et 10. Après insertion de la pièce 17, l'électro-aimant 26 est actionné de sorte que la rondelle d'appui 24 s'écarte de la bille ou du galet 22, la pièce n'étant plus maintenue dans le perçage 16. Dès que le bras ayant reculé, la pièce 17 est libérée, l'effort transversal exercé sur l'embout disparaît et cet embout se recentre automatiquement sous l'effet de l'attraction des deux disques.

Dans le mode de réalisation de la figure 2, on retrouve le bras 1 sur lequel est fixé le disque aimanté 5. Mais en regard de celui-ci se trouve une pièce aimantée 27 qui présente une face plane circulaire 28 tournée vers le disque 5, de même section transversale que ce disque, les billes 13 étant intercalées entre cette face plane et le disque, et une face sphérique concave 29. Le poignet comporte par ailleurs une autre pièce aimantée 30, fixée dans l'embout 8 et présentant une face sphérique convexe 31 disposée vis-à-vis de la face sphérique 29 de la pièce 27, ces deux faces ayant même section transversale et présentant des polarités contraires. Les deux faces 29 de la pièce présentent un même centre situé au voisinage de l'extrémité de la pièce à introduire 17. Des billes métalliques 32 sont interposées entre les deux faces 29 et 31. Des rondelles analogues aux rondelles 6 et 11 et non représentées au dessin empêchent les billes 13 et 32 de s'échapper.

La pièce 17 peut ainsi se déplacer parallèlement à elle-même par rapport au bras 1 dans n'importe quelle direction alors que l'embout 8 peut pivoter dans n'importe quel sens par rapport à la pièce 27. On voit ainsi qu'il est possible de corriger un défaut de position selon deux degrés de liberté et un défaut d'orientation également selon deux degrés de liberté.

## Revendications

1. Poignet de robot destiné à introduire une pièce mâle (17) dans un alésage (19), l'extrémité de la pièce et/ou l'ouverture de l'alésage étant chanfreinées, et qui comprend un bras (1) relié au robot, un embout (8) propre à porter la pièce (17) et des moyens de liaison solidaires du bras et de l'embout, séparés les uns des autres par des billes (13 ou 32), permettent un déplacement libre de l'embout par rapport au bras, et assurant un autocentrage de cet embout, caractérisé en ce que les moyens de liaison comprennent des éléments (5, 10, 27 ou 30) aimantés dans la direction de leur axe, qui sont interposés entre le bras (1) et l'embout (8) et disposés de manière à s'attirer mutuellement, et en ce que les billes (13 ou 32) séparant les deux éléments l'un de l'autre sont réalisées en un métal non diamagnétique de façon à la fois transmettre le flux magnétique et assurer le centrage.

2. Poignet de robot selon la revendication 1, caractérisé en ce que les faces en regard des éléments (5 et 10) sont planes, les éléments étant solidaires respectivement du bras (1) et de l'embout (8).

3. Poignet de robot selon la revendication 1, caractérisé en ce que les faces en regard des éléments aimantés sont sphériques, l'une concave et l'autre convexe, les éléments étant solidaires respectivement du bras (1) et de l'embout (8).

4. Poignet de robot selon la revendication 1, caractérisé en ce que les moyens de liaison comprennent trois éléments (5, 27 et 30) aimantés dans la direction de leur axe, qui sont superposés et séparés les uns des autres par des billes (13 ou 32), l'un des éléments d'extrémité étant solidaire du bras (1) alors que l'autre est solidaire de l'embout (8), l'élément central (27) présentant une face plane (28) en regard d'une face plane de l'un (5) des éléments d'extrémité et une face sphérique (29), concave ou convexe, en regard d'une face sphérique (21), respectivement convexe ou concave, de l'autre élément d'extrémité (30).

5. Poignet de robot selon l'une des revendications précédentes, caractérisé en ce que les faces en regard des éléments aimantés ont même section transversale.

6. Poignet de robot selon l'une des revendications précédentes, caractérisé en ce que l'un (5) des éléments aimantés comporte un alésage dans lequel est engagée une extrémité (3) du bras (1) et est maintenu par une rondelle amagnétique (6) formant en même temps butoir intérieur pour les billes (13).

7. Poignet de robot selon l'une des revendications précédentes, caractérisé en ce que l'un (10) des éléments aimantés est engagé dans un évidement (9) de l'embout (8) et maintenu par une rondelle amagnétique (11) formant en même temps butoir extérieur pour les billes (13).

8. Poignet de robot selon l'une des revendications précédentes, caractérisé en ce que l'embout comporte des moyens (22...26) pour maintenir la pièce (17) et propres à libérer cette pièce sur ordre du robot quand elle est engagée dans son alésage.

## Claims

1. Robot wrist for inserting a male part (17) into a bore (19), the end of the part and/or the opening of the bore being chamfered, and which comprises an arm (1) connected to the robot, and end piece (8) adapted for carrying the part (17) and connecting elements fast with the arm and with the end piece, separated from each other by balls (13 or 32) allowing free movement of the end piece with respect to the arm and providing self-centring of this end piece, characterized in that the connecting means comprise elements (5, 10, 27, 30) magnetized in the direction of their axis, which are inserted between arm (1) and the end piece (8) and are disposed so as to attract each other mutually, and in that the balls (13 or 32) separating the two elements from each other are made from an non-diamagnetic metal so as to transmit the magnetic flux and provide centring at one and the same time.

2. Robot wrist according to claim 1, characterized in that the opposite faces of the elements (5, 10) are flat, the elements being fast respectively with the arm (1) and the end piece (8).

3. Robot wrist according to claim 1, characterized in that the opposite faces of the magnetized elements are spherical, one concave and the other convex, the elements being fast respectively with the arm and the end piece (8).

4. Robot wrist according to claim 1, characterized in that the connecting means comprise three elements (5, 27 and 30) magnetized in the direction of their axis, which are superimposed and separated from each other by balls (13 or 32), one of the end elements being fast with the arm (1) whereas the other is fast with the end piece (8), the central element (27) having a flat face (28) opposite a flat face of one (5) of the end elements and a spherical face (29), concave or convex, opposite a spherical face (21), respectively convex or concave, of the other end element (30).

5. Robot wrist according to one of the preceding claims, characterized in that the opposite faces of the magnetized elements have the same cross section.

6. Robot wrist according to one of the preceding claims, characterized in that one (5) of the magnetized elements comprises a bore in which is engaged one end (3) of the arm (1) and is held in position by an amagnetic washer (6) forming at the same time an inside stop for the balls (13).

7. Robot wrist according to one of the preceding claims, characterized in that one (10) of the magnetized elements is engaged in a recess (9) of the end piece (8) and is held in position by an amagnetic washer (11) forming at the same time an external stop for the balls (13).

8. Robot wrist according to one of the preceding claims, characterized in that the end piece comprises means (22...26) for holding the part (17) in position and adapted for releasing this part on the order of the robot when it is engaged in its bore.

## Patentansprüche

1. Roboter-Handgelenk zum Einführen eines männlichen Bauteils (17) in eine Bohrung (19), wobei das Ende des Bauteils und/oder die Öffnung der Bohrung angefast sind, welches einen mit dem Roboter verbundenen Arm (1) aufweist sowie ein zum Tragen des Bauteils (17) geeignetes Ansatzstück (8) und Elemente zur kraftschlüssigen Verbindung des Arms mit dem Ansatzstück, die durch Kugeln (13 oder 32) voneinander getrennt sind und eine freie Verschiebung des Ansatzstücks in Bezug auf den Arm zulassen und eine Selbstzentrierung dieses Ansatzstücks sicherstellen, dadurch gekennzeichnet, daß die Verbindungsmittel in der Richtung ihrer Achse magnetische Elemente (5, 10, 27 oder 30) aufweisen, welche zwischen den Arm (1) und das Ansatzstück (8) eingeschaltet und so angeordnet sind, daß sie sich wechselseitig anziehen und daß die Kugeln (13 oder 32), die die beiden Elemente voneinander trennen, aus einem nicht-diamagnetischen Material bestehen derart, daß sie gleichzeitig den magnetischen Fluß übertragen und die Zentrierung sicherstellen.

2. Roboter-Handgelenk nach Anspruch 1, dadurch gekennzeichnet, daß die einander gegenüberliegenden Oberflächen der Elemente (5 und 10) eben ausgebildet sind, wobei die Elemente jeweils kraftschlüssig mit dem Arm (1) bzw. dem Ansatzstück (8) verbunden sind.

3. Roboter-Handgelenk nach Anspruch 1, dadurch gekennzeichnet, daß die einander gegenüberliegenden Oberflächen der magnetischen Elemente sphärisch ausgebildet sind, wobei die eine konkav und die andere konvex gekrümmt ist und die Elemente jeweils kraftschlüssig mit dem Arm (1) bzw. dem Ansatzstück (8) verbunden sind.

4. Roboter-Handgelenk nach Anspruch 1, dadurch gekennzeichnet, daß die Verbindungsmittel drei in der Richtung ihrer Achse magnetische Elemente (5, 27 und 30) aufweisen, die übereinander angeordnet und durch Kugeln (13 oder 32) voneinander getrennt sind, wobei eines der an den Enden angeordneten Elemente kraftschlüssig mit dem Arm (1) verbunden ist, während das andere kraftschlüssig mit dem Ansatzstück (8) verbunden ist und das zentrale Element (27) eine ebene Oberfläche (28) aufweist, die einer ebenen Oberfläche eines der Elemente (5) am Ende gegenüberliegt sowie eine sphärische konkav oder konvex gekrümmte Oberfläche (29), welche einer entsprechenden sphärischen konvex oder konkav gekrümmten Oberfläche des anderen Elements (30) am Ende gegenüberliegt.

5. Roboter-Handgelenk nach einem der vorhergehenden Ansprüche, dadurch gekennzeichnet, daß die einander gegenüberliegenden Oberflächen der magnetischen Elemente den gleichen Querschnitt aufweisen.

6. Roboter-Handgelenk nach einem der vorhergehenden Ansprüche, dadurch gekennzeichnet, daß eines der magnetischen Elemente (5) eine Bohrung aufweist, in welche ein Ende (3) des Arms (1) eingreift und durch eine nichtmagnetische Unterlegscheibe (6) gehalten ist, die gleichzeitig einen inneren Anschlag für die Kugeln (13) bildet.

7. Roboter-Handgelenk nach einem der vorhergehenden Ansprüche, dadurch gekennzeichnet, daß eines der magnetischen Elemente (10) in eine Aussparung (9) des Ansatzstücks (8) eingreift und durch eine nichtmagnetische Unterlegscheibe (11) gehalten ist, die gleichzeitig einen äußeren Anschlag für die Kugeln (13) bildet.

8. Roboter-Handgelenk nach einem der vorhergehenden Ansprüche, dadurch gekennzeichnet, daß das Ansatzstück Mittel (22...26) aufweist zur Halterung des Bauteils (17), die dazu geeignet sind, dieses Bauteil auf einen Befehl des Roboters hin freizugeben, wenn es in seine Bohrung eingeführt ist.

FIG.1

FIG.2

EP 0 148 677 B1